# EUROPEAN PATENT SPECIFICATION

(11) **EP 1 332 046 B1**
(45) Date of publication and mention of the grant of the patent: **16.09.2009**
(21) Application number: 01987713.3
(22) Date of filing: 12.10.2001
(51) Int. Cl.: B32B 27/12, D06N 3/14

(54) **WATERPROOF BREATHABLE LAYERED ARTICLE WITH HIGH MECHANICAL STRENGTH**
WASSERDICHTER, ATMUNGSAKTIVER, MEHRSCHICHTIGER GEGENSTAND MIT HOHER MECHANISCHER FESTIGKEIT
ARTICLE LAMINE PERMEABLE A L'AIR ET IMPERMEABLE A L'EAU PRESENTANT UNE RESISTANCE MECANIQUE ELEVEE

(30) Priority: 19.10.2000 IT PD20000244
(43) Date of publication of application: 06.08.2003
(60) Divisional application: 08003636.1
(73) Proprietor: Geox S.p.A., 31044 Montebelluna Località Biadene (Treviso) (IT)
(72) Inventor: POLEGATO MORETTI, Mario, I-31035 Crocetta del Montello (IT)
(74) Representative: Modiano, Micaela Nadia
(86) International application number: PCT/EP2001/011835
(87) International publication number: WO 2002/032662

(56) References cited:
- EP-A- 0 310 037
- US-A- 4 229 472
- US-A- 4 554 198
- US-A- 4 803 116
- C.-H. Fischer-Bobsien: Internationales Lexikon Textilveredlung + Grenzgebiete, 4th. ed. (1975); A. Laumannsche Verlagsbuchhandlung, Dülmen (DE); p. 2078

## Description

### Technical field

The present invention relates to a waterproof breathable layered article.

### Background art

Waterproof breathable layered articles are already known, particularly in the field of clothing and shoes, which are constituted in practice by a membrane based on expanded polytetrafluoroethylene, microporous and/or hydrophilic polyurethane coupled by lamination to a supporting mesh made of plastics.

The membrane is in fact inherently unable to support itself, since in practice it is constituted by a very thin film.

Applications that use breathable waterproof membranes are disclosed in several patents by the same Assignee related to waterproof breathable soles for shoes.

By way of example, US-5,044,096 and EP-0382904, hereby incorporated by reference, disclose a sole constituted by:
-- a lower part made of rubber or synthetic material with through microperforations,
-- a membrane made of breathable and waterproof microporous material, which covers the lower part,
-- an upper part, preferably made of rubber or other synthetic material, which is assembled to the lower part and has through holes.

In practical execution, the membrane and the upper part can constitute the layered element mentioned in the introduction, which is joined hermetically and perimetrically to the lower part.

Although the sole having the above described features has been commercially available for years and is unanimously acknowledged to be capable of ensuring correct exchange of heat and water vapor between the microclimate inside the shoe and the external one, said sole has been found to have drawbacks, including in particular the tendency of the membrane to tear due to its different elongation with respect to the lower part (tread) with which it is assembled monolithically at its peripheral region.

The membrane used is made of expanded polytetrafluoroethylene.

This is a poorly elastic material, whereas the sole must be very elastic and flexible by its own nature and in view of its application requirements.

The supporting mesh that is used is characterized by a reduced resistance to traction (breaking stress of approximately 150 N and ultimate elongation of approximately 50%) and therefore does not assist the membrane very much.

Therefore, the membrane is unable to absorb the stresses induced therein by the flexural deformations of the sole in movements during use and accordingly tends to tear and lose its waterproof properties.

Normally, a protective element, usually made of polyester felt, is placed below the membrane, but it has been found unable, on its own, to absorb the tensions induced by the deformations of the sole.

Polyurethane membranes are not used due to their poor mechanical characteristics (ultimate elongation approximately 50%, breaking stress approximately 150 N).

### Disclosure of the invention

The aim of the present invention is to provide a waterproof breathable layered article that can replace those currently comprising polytetrafluoroethylene membranes and is characterized by better mechanical strength characteristics, particularly by low elongation and high breaking stress.

Within this aim, an object of the present invention is to provide a layered element that is capable of withstanding greater stresses than those usually generated in particular in applications on shoes.

Another object is to provide a layered element with waterproof and breathable characteristics that are at least equal to those of articles of the same type already in use.

This aim and these and other objects which will become better apparent hereinafter are achieved by a waterproof breathable layered article, according to appended claim 1.

Further characteristics and advantages of the invention will become better apparent from the description of a preferred embodiment thereof, given only by way of non-limitative example hereinafter.

### Ways of carrying out the invention

Particular polymers, for example polyurethanes based on polyether and/or polyester, are known which are characterized by marked hydrophilic characteristics produced by (temporary or stable) dipoles that are present along the molecule chain.

These materials are fluid before they polymerize and are therefore suitable to be spread on temporary process substrates or on final substrates which comprise fibers for materials technologically per se known as composite, particularly with an ultimate elongation of substantially 5% or less and a breaking stress of substantially 1000 N or more.

Said polymers can resume the fluid state by dissolving them in suitable solvents.

After polymerization or elimination of the solvent by drying, the membrane obtained by spreading (with a thickness in the order of one tenth of a millimeter) is inherently able to withstand elastically a considerable ultimate elongation (greater than 50%) and has a breaking stress comparable to that of known polytetrafluoroethylene membranes.

In order to achieve the above mechanical characteristics, the substrate can also be formed by substrates made of fibers of carbon and/or glass and/or polypropylene and/or polyester woven with various orientations: weft, warp, oblique.

This is done to conveniently ensure optimum resistance to deformation in all directions, although it is possible to consider efficient the longitudinal and transverse directions.

In an embodiment which does not form part of the claimed invention, the substrate can assume the form of a lattice constituted by bands of woven and impregnated fibers, which leave wide gaps for air passage.

The fibers of the substrate can be impregnated with appropriately provided resins, such as phenolic resins, polyurethane resins, epoxy resins, natural or synthetic rubbers which are designed to transmit the load to the entire set of fibers.

As an alternative, the polymer that constitutes the membrane can also act as an impregnating agent.

Impregnation must be performed so as to avoid creating a compact layer, in order to avoid compromising breathability.

For this purpose, it is possible to provide through holes in the substrate.

As an alternative, which does not form part of the claimed invention, it is possible to provide the substrate by means of fibers having characteristics similar to those described above but having a low melting point, so that by means of a hot-pressing process it is possible to melt part of them so as to monolithically couple them by melting, producing impregnation in this manner.

As an alternative which does not form part of the claimed invention, the substrate can be constituted by a set of fibers of the types described above, embedded in the mass of the polymer in a random arrangement and in such an amount as to form a composite in which the polymer constitutes simultaneously both the matrix for mutually connecting the fibers and the waterproof and breathable membrane.

The layered article is conveniently produced with a thickness in the order of 1-3 mm.

Once spreading has been performed at ambient temperature, the long-fiber substrate is coupled to the spread material before it polymerizes, i.e., before it becomes solid.

The assembly must then be polymerized, and this transformation can be induced by heating (in the order of 30-40 °C) and/or application of radiation having a suitable wavelength (for example ultraviolet rays) and/or variation in the humidity of the ambient air.

In this manner, the long-fiber structure is completely or partially immersed in the polymer mass.

Polymerization can even be induced by the presence of atmospheric dust and/or moisture.

In the case of permanent coupling to a substrate, the end result is a layered article that comprises at least one permeable and breathable membrane that is spread, and therefore intimately coupled, on at least one surface of a substrate made of permeable material.

From the industrial production standpoint, it is possible to provide for direct continuous application of the fluid polyurethane, by means of a feeder provided with a doctor blade, onto the substrate which advances continuously (for example by means of a moving belt) and subsequent insertion in an oven.

In an alternative case, the liquid polyurethane can be applied by means of a feeder provided with a doctor blade on a temporary surface (release paper), starting the polymerization step so that the membrane assumes a certain consistency but is still able to bond to a long-fiber textile substrate and perform coupling to said substrate.

In another case, the membrane can be provided separately and then coupled to the substrate (on one or both surfaces thereof) by joining to a layer constituted by the same constituent of the membrane.

In another alternative, it is possible to provide for impregnation of the substrate with the polyurethane.

In practice it has been found that the intended aim and objects of the present invention have been achieved.

A waterproof breathable layered article has in fact been devised which is capable of replacing those that currently comprise polytetrafluoroethylene membranes, since it achieves by higher mechanical strength characteristics, particularly a lower elongation and a higher breaking stress.

The layered article in fact combines the membrane made of hydrophilic polymer, such as polyurethane based on polyether and/or polyester, which is highly elastic (ultimate elongation can be estimated at 50%) with a substrate which has elongation values of less than 5% and breaking stress of more than 1000 N.

The layered article is therefore capable of withstanding stresses that are higher than those usually occurring in particular in applications on shoes.

The article further has waterproofing and breathability characteristics that are at least equal to those of articles of the same type that are already in use.

The invention thus conceived is susceptible of numerous modifications and variations, all of which are within the scope of the inventive concept.

In practice, the materials used, so long as they are compatible with the contingent use, as well as the dimensions, may be any according to requirements.

The disclosures in Italian Patent Application No. PD2000A000244 from which this application claims priority are incorporated herein by reference.

## Claims

1. A waterproof breathable layered article, comprising at least one membrane made of hydrophilic polymer, **characterized in that** said membrane is coupled to a substrate which is permeable to water and 5 comprises fibers for materials which are technologically per se known as composites, said hydrophilic polymer being polyurethane based on polyether and/or polyester, said substrate being formed by layers made of fibers of carbon and/or glass and/or polypropylene and/or polyester woven with different orientation: weft, warp, oblique, and wherein the fibers of the substrate are impregnated with resins such as phenolic resins, polyurethane resins, epoxy resins, natural or synthetic rubbers which are designed to transmit the load to the entire set of fibers, impregnation being such as to avoid creating a compact layer in order to avoid compromising breathability.

2. A method for manufacturing a layered article according to claim 1, consisting in:
-- applying the fluid polymer by means of a feeder on a temporary surface,
-- starting the polymerization step so that the membrane assumes a certain consistency, and
-- coupling to the substrate by completing the polymerization.

3. The method for producing a layered article according to claim 1, consisting in:
-- producing the membrane separately, and
-- coupling it to the substrate by joining with a layer constituted by the same polymer that constitutes the membrane.

## Patentansprüche

1. Wasserdichter, atmungsaktiver, mehrschichtiger Gegenstand, welcher wenigstens eine Membrane aus hydrophilern Polymer aufweist, **dadurch gekennzeichnet, dass** die Membrane mit einem Substrat verbunden ist, welches für Wasser durchlässig ist und Fasern aus Materialien aufweist, die technologisch an sich als Verbundstoffe bekannt sind, wobei das hydrophile Polymer Polyurethan auf der Basis von Polyether und/oder Polyester ist, das Substrat von Lagen gebildet wird, die aus Kohlenstofffasern und/oder Glasfasern hergestellt sind und/oder von Polypropylen- und/oder Polyester gewebt in unterschiedlichen Orientierungen: Schussfasern, Kettfasern, Schräglage gebildet werden und wobei die Fasern des Substrats mit Harzen, wie Phenolharzen, Polyurethanharzen, Epoxiharzen, natürlichen oder synthetischen Kautschuken imprägniert sind, die dazu bestimmt sind, die Belastung auf dem gesamten Satz von Fasern zu übertragen, wobei die Imprägnierung derart gewählt ist, dass die Erzeugung einer kompakten Schicht zur Vermeidung einer Beeinträchtigung der Atmungsaktivität verhindert wird.

2. Verfahren zum Herstellen des mehrschichtigen Gegenstands nach Anspruch 1, welches folgendes aufweist:
- Aufbringen eines fluiden Polymers mittels einer Aufgabeeinrichtung auf eine temporäre Fläche,
- Einleiten des Polymerisationsschritts, so dass die Membrane eine gewisse Konsistenz annimmt, und
- Verbinden mit dem Substrat zur Vervollständigung der Polymerisation.

3. Verfahren zum Herstellen eines mehrschichtigen Gegenstands nach Anspruch 1, welches folgendes aufweist:
- gesonderte Herstellung der Membrane, und
- Verbinden derselben mit dem Substrat durch Verbinden mit einer Schicht, die von demselben Polymer gebildet wird, aus welchem die Membrane hergestellt ist.

## Revendications

1. Article stratifié perméable à l'air et imperméable à l'eau, comprenant au moins une membrane faite de polymère hydrophile, **caractérisé en ce que** ladite membrane est couplée à un substrat qui est perméable à l'eau et comprend des fibres de matériaux qui sont technologiquement connus en soi comme composites, ledit polymère hydrophile étant du polyuréthane à base de polyéther et/ou de polyester, ledit substrat étant formé de couches faites de fibres de carbone et/ou de verre et/ou de polypropylène et/ou de polyester tissées avec des orientations différentes: trame, chaîne, oblique, et où les fibres du substrat sont imprégnées de résines telles que des résines phénoliques, des résines polyuréthane, des résines époxy, des caoutchoucs naturels ou synthétiques qui sont conçus pour transmettre la charge à l'ensemble du réseau de fibres, l'imprégnation étant réalisée de sorte à éviter de créer une couche compacte afin d'éviter de compromettre la perméabilité à l'air.

2. Procédé de fabrication d'un article stratifié selon la revendication 1, consistant à :
appliquer le polymère fluide au moyen d'une alimentation sur une surface temporaire,
commencer l'étape de polymérisation de sorte que la membrane prenne une certaine consistante, et
coupler au substrat en terminant la polymérisation.

3. Procédé de production d'un article stratifié selon la revendication 1, consistant à :
produire la membrane séparément, et
coupler celle-ci au substrat en la joignant à une couche constituée du même polymère qui constitue la membrane.
